# EUROPEAN PATENT SPECIFICATION

(11) **EP 4 144 205 B1**
(45) Date of publication and mention of the grant of the patent: **06.11.2024**
(21) Application number: 22191943.4
(22) Date of filing: 24.08.2022
(51) Int. Cl.: A01F 15/07

(54) **ROUND BALER**
RUNDBALLENPRESSE
ROTO-PRESSE

(30) Priority: 03.09.2021 GB 202112563
(43) Date of publication of application: 08.03.2023
(73) Proprietor: Kuhn-Geldrop B.V., 5667 KP Geldrop (NL)
(72) Inventor: HURK, VAN DEN, Nick Franciscus Johannes, NL-5384 ST Heesch (NL); BOOMEN, VAN DEN, Benny Petrus Lambertus Martinus, NL-5595 GC Leenderstrijp (NL); VAN DOORMAAL, Thomas, Petrus, Lambertus, NL-5089NK Haghorst (NL)
(74) Representative: Murgitroyd & Company

(56) References cited:
- EP-A1- 1 776 860
- DE-A1- 10 309 658
- US-A1- 2020 008 357
- US-A1- 2021 092 904
- KUHN FRANCE: "KUHN FBP 3135 - Presses combinées à balles rondes - (Présentation du liage par film)", 12 September 2018 (2018-09-12), XP055918421, Retrieved from the Internet <URL:https://www.youtube.com/watch?v=IW5ugTZmjP4> [retrieved on 20220505]

## Description

The present invention relates to a round baler having a binding apparatus for applying a binding material to a cylindrical surface of a bale formed in the bale chamber of the baler. The baler may be a variable chamber baler or a fixed chamber baler.

A binding apparatus for a baler has a cycle of operation in which the leading end of the binding material is presented to the outer surface of the bale when the bale has reached a desired size or pressure, the binding material is wrapped at least once around the bale, and the supply of binding material from the apparatus to the bale is severed when the required binding of the bale has been completed.

It is known to provide devices for applying binding material to the outer surface of the bale, which enter the binding material, such as film or netting, into the bale forming chamber in which the compressed bale is formed. The binding material is used to bind the compressed bale to prevent expansion of the compressed material after the bale is ejected from the bale chamber.

An apparatus for applying a binding material to the outer surface of an agricultural bale is described in EP1776860A1. This apparatus has a cycle of operation in which the leading end of the binding material is presented to the outer surface of the bale when the bale has reached a required size, the binding material is wrapped at least once around the bale (typically 2-3 times for netting or 4-5 times for film), and the supply of binding material from the apparatus to the bale is severed when the required binding of the bale has been completed. The apparatus comprises a support for a supply reel of binding material, such as netting, a pull-off device that draws binding material from the supply reel, and a feed mouth that feeds and guides the binding material to the outer surface of the bale. The feed mouth is moveable between an operative feeding position near to the outer surface of the bale where the binding material is presented by the feed mouth to the outer surface of the bale, and a retracted position which the feed mouth takes up when binding has been completed so that the supply of binding material can be severed.

This type of feeding system is generally reliable when netting material is used as the binding material. Once the bale has been bound, it can be ejected from the bale chamber and in the case of silage it may be subsequently wrapped with a stretch film material.

Lately, the demand for silage bales that are bound with film instead of net binding material has increased, owing to the fact that when such bales are subsequently wrapped with stretch film for full coverage only one type of material is used for both binding and wrapping of the bale. Then, when the bale is to be used as silage, the film binding material and the film wrapping can be peeled off in one operation and can be more easily disposed of or recycled.

Simply replacing the net binding material with film binding material on this kind of feeding device may however lead to reliability problems. Especially, the correct feeding of the film binding material cannot be reliably ensured owing to the fact that the film is more slippery than the net binding material and cannot be gripped so easily between the bale and the press roller at the start of the binding operation. As a result, the leading end of the film, called the tongue, that extends from the feed mouth can slip over the rollers and between the rollers and the bale, with the result that the film will not be pulled into the bale chamber. If the pull-off device continues to draw binding material from the supply reel, this binding material can become wrapped around the feed rollers or other parts of the binding system, requiring operation of the baler to be halted while the operator clears the excess film binding material from the machine. Similar problems can arise if the film breaks between the pull-off device and the bale chamber.

DE10308658 A1 describes a baler that determines whether the binding material is being fed correctly to the bale, allowing the binding process to be interrupted if incorrect feeding is detected.

EP2506701 B1 describes a binding apparatus for a baling machine in which at least two strips of film binding material are laid simultaneously side-by-side on the cylindrical surface of the bale to form a combined binding strip. The binding apparatus includes a pair of feed rollers that feed the strips of film binding material from the supply to the bale chamber. If one of the strips of film binding material is not fed correctly into the bale chamber so that it is not drawn into the bale chamber by rotation of the bale, continued feeding of the film binding material by the feed rollers can lead to a build-up of film binding material, potentially jamming the binding apparatus.

It is an object of the present invention to provide a round baler that mitigates at least some of the aforementioned problems.

According to one aspect of the invention there is provided a round baler as defined by the claims.

In one embodiment of the invention there is provided a round baler comprising a bale chamber having a crop mouth for introducing bale material into the bale chamber and a plurality of pressing elements configured to compress bale material in the bale chamber to form a round bale, a binding apparatus configured to apply at least one strip of binding material to a cylindrical surface of a bale formed in the bale chamber to bind the bale, wherein the binding apparatus includes a supply device comprising a support for a supply of binding material and a feed device that feeds binding material from the supply to a feed opening of the bale chamber, wherein the feed device includes a pull-off device that is configured to draw binding material from the supply and a feed mouth that receives binding material from the pull-off device; and a feed detector located between the pull-off device and the feed opening, which is configured to detect correct/incorrect feeding of the binding material into the bale chamber.

The feed detector can detect that the binding material is being drawn into the bale chamber by rotation of the bale. If the binding material is not being drawn into the bale chamber by rotation of the bale, for example because the tongue has not been grabbed by the bale, or if the binding material breaks between the pull-off device and the bale chamber, this can be detected by the feed detector, so that remedial action can be taken.

In addition, the feed detector can detect when a supply of binding material is exhausted, allowing the supply to be replenished.

According to the invention the binding apparatus is configured to apply a plurality of strips of binding material simultaneously to the cylindrical surface of a bale formed in the bale chamber to bind the bale, wherein the feed detector is configured to detect correct/incorrect feeding of each of the strips of binding material into the bale chamber.

These features enable the binding apparatus to detect a situation where, for example, one strip of binding material is fed correctly into the bale chamber and another strip of binding material is not fed correctly, potentially leading to a jam. By detecting this situation action can be taken immediately to prevent a build-up of binding material from the incorrectly fed strip, for example halting the feeding of binding material.

Optionally, the binding apparatus further comprises a cutter for cutting the strips of binding material between the feed mouth and the feed opening, wherein the cutter is configured to cut one or more of the strips of binding material, including optionally any correctly fed strips of binding material, when incorrect feeding of one or more strips of binding material is detected by the feed detector.

Typically, when two or more strips of binding material are fed simultaneously into the baling chamber they are drawn from the supply device by a pull-off device that engages both/all of the plurality of strips. If one strip of binding material is fed correctly into the bale chamber and another strip of binding material is not fed correctly, the correctly-fed strip can drive the pull-off device as the binding material is drawn into the bale chamber by rotation of the bale. As a result, the pull-off device can continue to draw binding material from the supply for the incorrectly-fed strip, and this binding material can accumulate within the feed device causing a jam. By cutting any correctly fed strips of binding material when incorrect feeding of one or more strips of binding material is detected by the feed detector, driving of the pull-off device can be halted so that no more binding material is drawn from the supply. The operator can then re-feed the strips of binding material correctly through the binding apparatus without having to clear a jam.

Optionally, the round baler further comprises a control device that is configured to alert an operator and/or to control operation of the pull-off device depending on whether correct/incorrect feeding of the binding material into the bale chamber is detected by the feed detector.

Optionally, the control device is configured to halt operation of the pull-off device when incorrect feeding of the binding material into the bale chamber is detected by the feed detector.

Optionally, the control device is configured to enable operation of the pull-off device when correct feeding of the binding material into the bale chamber is detected by the feed detector..

Optionally, the feed detector is configured to contact the binding material and to detect relative movement between the feed detector and the binding material.

Optionally, the feed detector comprises a detection roller that contacts the binding material and rotates in response to feeding of the binding material into the bale chamber.

Optionally, the feed detector comprises a rotation detector that senses rotation of the detection roller.

Optionally, the feed detector comprises a plurality of detection rollers that contact separate strips of binding material and rotate in response to feeding of the strips of binding material into the bale chamber.

Optionally, the feed detector is located between the pull-off device and the feed mouth.

Optionally, the feed mouth is configured for movement between a plurality of operational positions, said plurality of operational positions including (i) a feed position adjacent a feed opening of the bale chamber, which the feed mouth adopts when feeding binding material into the bale chamber, and (ii) a retracted position spaced from the feed opening.

Optionally, the feed detector is attached to the feed mouth and is configured for movement with the feed mouth between the feeding position and the retracted position.

Optionally, the round baler further comprises a cutter for cutting the binding material, wherein the binding apparatus configured to bring the feed mouth to the retracted position and cut the binding material when feeding of the binding material into the bale chamber is not detected by the feed detector.

Optionally, the supply device includes a pre-stretcher device located before the pull-off device, for pre-stretching the binding material.

Optionally, the binding material is film binding material.

Optionally, the binding apparatus includes a bundling device that is configured to bundle the binding material.

Optionally, the bundling device is configured to bundle the binding material by rotating the plane of the binding material upstream of the feed mouth, about an axis that extends in the feed direction of the binding material.

Optionally, the feed device is configured to feed a plurality of strips of binding material from the supply to the bale chamber, and the bundling device is configured to bundle the plurality of strips of binding material.

Optionally, the feed mouth is configured for pivoting movement between the plurality of operational positions.

According to another aspect of the present invention there is provided a round baler comprising a bale chamber having a crop mouth for introducing bale material into the bale chamber and a plurality of pressing elements configured to compress bale material in the bale chamber to form a round bale. Optionally, the baler comprises a binding apparatus configured to apply a film binding material to a cylindrical surface of a bale formed in the bale chamber to bind the bale. Optionally, the baler comprises a cutter device configured to cut the film binding material after the bale has been bound. Optionally, the binding apparatus includes a supply device comprising a support for supporting a supply of film binding material. Optionally, the baler comprises a feed device that feeds film binding material from the supply to the bale chamber. Optionally, the feed device includes a pull-off device that is configured to draw binding material from the supply and a feed mouth that receives the film binding material from the pull-off device. Optionally, the feed device is configured for movement between a plurality of operational positions. Optionally, said plurality of operational positions include a feed position adjacent a feed opening of the bale chamber, which the feed mouth adopts when feeding film binding material into the bale chamber. Optionally, said plurality of operational positions include a retracted position spaced from the feed opening, which the feed mouth adopts during cutting of the film binding material after the bale has been bound. Optionally, the cutter device is configured to cut the film binding material between the feed opening and the feed mouth when the feed mouth is in the retracted position. Optionally, the binding apparatus includes a bundling device that is configured to bundle the film binding material before the film binding material is cut. Optionally, the feed device is configured so that after the film binding material is cut, a cut end of film binding material forms a tongue that extends from the feed mouth. Optionally, the film binding material is bundled and the tongue has a width less than the width of the unbundled film binding material. Optionally, the baler includes a feed detector located between the pull-off device and the feed opening, which is configured to detect feeding of the binding material into the bale chamber.

Optionally, if the film binding material is bundled, the tongue has a stiffness that is greater than the stiffness of the unbundled film binding material. This allows greater control over the position of the tongue when it is inserted into the bale chamber through the feed opening, thus ensuring greater reliability of feeding. It is also easier to cut the film when it is bundled into a narrow tongue than when it is unbundled.

Optionally, the film binding material is bundled and the tongue has a width less than 20%, or less than 10%, or less than 5%, of the width of the unbundled film binding material. For example, an unbundled film with a width of 620mm may typically be bundled to produce a tongue with a width of 10-15mm (1.7-2.5%). Alternatively, the film binding material may be unbundled so that the tongue does not have a significantly reduced width.

Optionally, the pull-off device may consist of an actively driven roller, or some other driven element. The provision of a pull-off device can reduce the risk of the film binding material tearing, and it can help with feeding of the tongue into the bale chamber to ensure that it is captured by the rotating bale.

Optionally, the feed mouth receives film binding material from the pull-off device and is configured for movement relative to the pull-off device. For example, the pull-off device may be located in a fixed position relative to the frame of the baler and the feed mouth may be configured for movement relative to the frame. Optionally, the feed mouth may be configured for pivoting movement relative to the frame. This ensures precise positioning of the feed mouth when feeding the binding material into the bale chamber through the feed opening, and also provides a substantially vertical passage through the feed mouth in the retracted position, allowing a tongue or cut end of the binding material to fall freely through the feed mouth to the correct length.

Optionally, the bundling device is located before the pull-off device, in order to bundle the film before it arrives at the pull-off device. Alternatively, the bundling device may be located after the pull-off device.

Optionally, the bundling device is configured to bundle the film binding material by rotating the plane of the film binding material about an axis that extends in the feed direction of the film binding material. Optionally, the plane of the film binding material may be rotated before the pull-off device. Alternatively, the bundling device may be configured to bundle the film binding material by some other method, for example by providing a film guiding device that draws the edges of the film binding material inwards towards the centre.

Optionally, the bundling device is configured to bundle the film binding material by rotating the support for the supply of film binding material.

Optionally, the feed device is configured to feed a plurality of strips of film binding material from the supply to the bale chamber, wherein the feed detector is configured to detect correct/incorrect feeding of each of the strips of film binding material into the bale chamber.

Optionally, the binding apparatus comprises a cutter for cutting the strips of film binding material between the feed mouth and the feed opening, wherein the cutter is configured to cut one or more of the strips of film binding material, including optionally any correctly fed strips of film binding material, when incorrect feeding of one or more strips of film binding material is detected by the feed detector.

Optionally, the bundling device is configured to bundle the plurality of strips of film binding material. The plurality of strips of film binding material may comprise 2 strips, or more than 2 strips. For example, in one embodiment, 2 strips of film binding material may be provided, each having a width of 620mm.

Optionally, the supply device includes a pre-stretcher device configured to stretch the film binding material before the film binding material is applied to the cylindrical surface of the bale.

Optionally, the pre-stretcher device is located before the feed device.

Optionally, the pre-stretcher device is configured to increase the length of the film binding material by a factor of 1.3 to 1.8, or 1.4 to 1.6, or about 1.5.

Optionally, after the film binding material is cut, and optionally while the feed mouth is in the retracted position, the pull-off device is driven to increase the length of the tongue. The pull-off device may be driven actively, for example by a motor or a drive transmission system, or it may be driven by inertia if for example it comprises a roller that is already rotating.

Optionally, the pull-off device is controlled to adjust the increased length of the tongue.

Optionally, the pull-off device is controlled by adjustable braking. Alternatively, it may be controlled directly, for example through a drive motor.

Optionally, the pull-off device is driven actively to draw film binding material from the supply during movement of the feed mouth to the feed position, to prevent the film binding material from being pulled out of the feed mouth.

Optionally, during movement of the feed mouth to the feed position, the pull-off device is driven actively to draw a length of film binding material that is less than the length required to accommodate movement of the feed mouth to the feed position, for example from the retracted position or the holding position. As a result, the tongue may be partially drawn back into the feed mouth, causing it to stand up in a more erect position, thereby improving feeding of the tongue into the bale chamber.

Optionally, the pull-off device is adjustable to adjust the length of film binding material drawn from the supply during movement of the feed mouth to the feed position. This enables adjustment of the length of the tongue to different operating conditions (e.g. different atmospheric conditions and different types of film), as well as user preferences. All three adjustments (actively driving the pull-off device after severing the film binding material, braking the inertia-driven pull-off device and actively driving the pull-off device while moving the feed mouth to the feed position) can be used to control the length of the tongue or cut end of film binding material, thereby ensuring reliable feeding into the bale chamber.

Optionally, the pull-off device is actively driven during binding of the bale to draw film binding material from the supply. This can reduce the risk of the film tearing during binding of the bale.

Optionally, during binding of the bale the pull-off device is driven to draw the film binding material at a speed that is less than the circumferential speed of the bale in the bale chamber. For example, the pull-off device may be driven at approximately 90% of the circumferential speed of the bale. Because the drive speed of the pull-off device is less than the speed at which the binding material is drawn by the bale, the binding material will be stretched between the pull-off device and the bale, ensuring a tight binding. This is in addition to any pre-stretching that may have been applied at the supply device.

Actively driving the pull-off device at a reduced speed so as to continue feeding the film binding material when a tear starts to form helps to prevent the tear spreading across the full width of the film.

Optionally, the pull-off device comprises at least one driven roller. It may also include a second roller, which may be either driven or undriven.

Optionally, the feed mouth includes first and second gripping elements that are configured to grip opposite sides of the film binding material.

Optionally, the first and second gripping elements comprise lips that are pressed together to grip the film binding material. Optionally the lips may be resilient. Alternatively the lips may be relatively inflexible.

Optionally, the first and second gripping elements are configured to be adjustable between a closed configuration in which they grip the film binding material and an open configuration in which they do not grip the film binding material.

Optionally, the first and second gripping elements are configured to adopt the open configuration when the feed mouth is in the retracted position, for example by pivoting of at least one of the lips.

Optionally, the first and second gripping elements are configured adopt the closed configuration when the feed mouth moves towards the feed position, to grip the film binding material.

Optionally, the first and second gripping elements are configured provide a substantially vertical free passageway between the first and second gripping elements in the open configuration, allowing a bundled tongue of film binding material to be fed easily through the feed mouth.

Certain embodiments of the present invention will now be described, by way of example, with reference to the accompanying drawings, in which:
Figure 1 is an isometric view of a baler according to an embodiment of the invention, showing the front and left hand sides;
Figure 2 is an isometric view of part of the baler with its external covers removed, showing the front and right hand side;
Figure 3 is an isometric view of part of the baler with its external covers removed, showing the front and left hand side;
Figure 4 is a schematic side view showing components of a binding apparatus, comprising part of the baler, in a first configuration;
Figure 5 is a schematic side view showing components of the binding apparatus in a second configuration;
Figure 6 is a schematic side view showing components of the binding apparatus in a third configuration;
Figure 7 is a schematic side view showing components of the binding apparatus in a fourth configuration;
Figures 8-11 show components of the binding apparatus, illustrating various potential problems associated with the feeding of the binding material;
Figure 12 is a schematic side view showing components of a binding apparatus when configured to bind a bale with net binding material;
Figure 13 is an isometric view showing parts of the binding apparatus, and
Figure 14 is a side view of the binding apparatus.

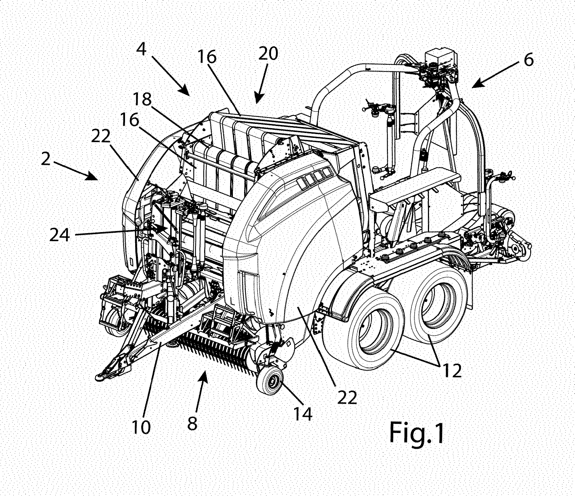

Figure 1 illustrates the main components of a round baler 2 according to an embodiment of the invention. In this embodiment the baler 2 is a combined baler/wrapper machine, which includes a front section 4 where a bale is formed from bale material, and a rear section 6 where the bale is wrapped with a stretch film wrapping material. It should be noted that the invention is also applicable to balers that do not include an integrated wrapper section. In that case, bales formed by the baler 2 may optionally be wrapped subsequently using a separate wrapping machine as is well known in the art. It should also be noted that the wrapper comprising the rear section 6 may take alternative forms, as are known in the art. The wrapper illustrated is of a conventional orbital type and will not be further described.

The baler 2 in this embodiment is of the variable chamber type, although it could alternatively be of the fixed chamber type. The baler 2 includes a pick-up device 8 for picking up bale material, for example cut straw or grass, from the ground, a drawbar 10 for attaching the baler to a tractor, support wheels 12, 14 and a plurality of press elements comprising elongate belts 16 that are guided around a set of rollers 18, 60 and/or driven press rollers 56, 62, 64. The belts 16 together with a pair of end plates (not shown) create a cylindrical bale chamber 20 in which a round bale can be formed. The pick-up device 8 is configured to feed the bale material into the bale chamber 20 through a crop mouth 21. The sides of the baler 2 are covered by covers 22. The baler may be driven, for example, via the power take off (PTO) of the tractor. Again, these components are conventional and will not be further described.

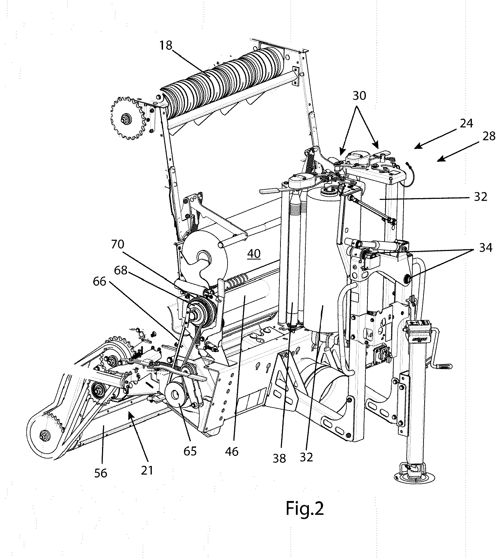

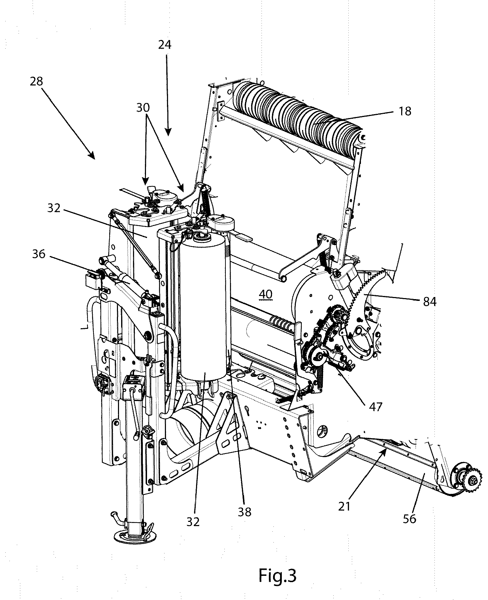

The baler also includes a binding apparatus 24 that is configured to apply a binding material, in this example a film binding material, to a cylindrical surface of the bale formed in the bale chamber to bind the bale, and a cutter device 26 that is configured to cut the film binding material after the bale has been bound. Additional components of the baler are shown in figures 2 and 3, which show the internal mechanism of the baler with the covers 22 and belts 16 removed.

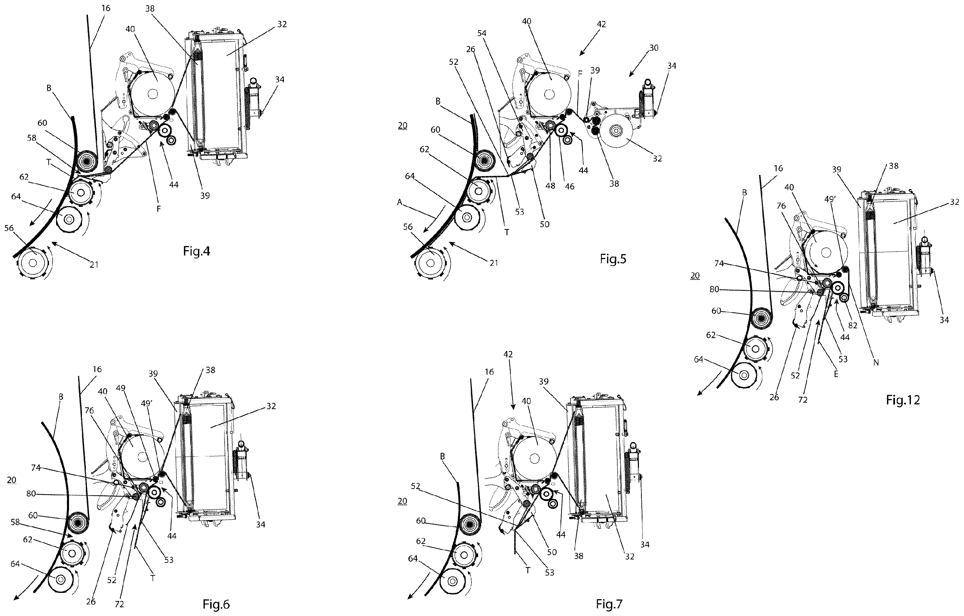

The binding apparatus 24 includes a supply device 28 for a supply 32 of film binding material. In this embodiment the supply 32 comprises two reels of film binding material, each reel being mounted on a separate support 30. Optionally, the supports 30 are each mounted on a pivot 34 which allows the support and the associated reel to pivot through 90 degrees from a vertical bundling position shown in figures 2, 3 and 4 to a horizontal binding position shown in figure 5 (compare figures 4 and 5). An actuator 36 is provided to drive rotation of the supports 30 and reels 32 between the vertical and horizontal positions. Alternatively, the supports 30 may be fixed in position so that they cannot be rotated to a bundling position.

The supply device 28 also includes a pre-stretcher device 38 for stretching the film binding material lengthwise as it is drawn from the reel 32. The pre-stretcher device 38 is of a conventional kind, comprising two rollers that are driven at different circumferential speeds to stretch the film binding material lengthwise as it passes around the two rollers. A freely-rotating supply guide roller 39 located after the pre-stretcher device 38 also comprises part of the supply device 28.

In this embodiment, the baler also includes a reel 40 of net binding material, which can be used instead of the film binding material if, for operational reasons, the use of net binding material is preferred. The provision of a net binding system is optional.

Further features of the binding apparatus 24 can be seen more clearly in figures 4-8. Referring first to figure 5, the binding apparatus 24 comprises a feed device 42 that supplies film binding material F from the supply 30 to the bale chamber 20. The feed device 42 includes a pull-off device 44 comprising at least one driven roller 46, which can be braked by an adjustable brake 47. In this embodiment the pull-off device 44 also includes a freely rotating pinch roller 48 that cooperates with the driven roller 46 to grip the film F as it passes through the pinch between the rollers 46, 48. Alternatively, the pinch roller 48 may be driven or it may be omitted. The film binding material F is guided from the supply device 28 to the feed device 42 by first and second freely-rotating feed guide rollers 49, 49'.

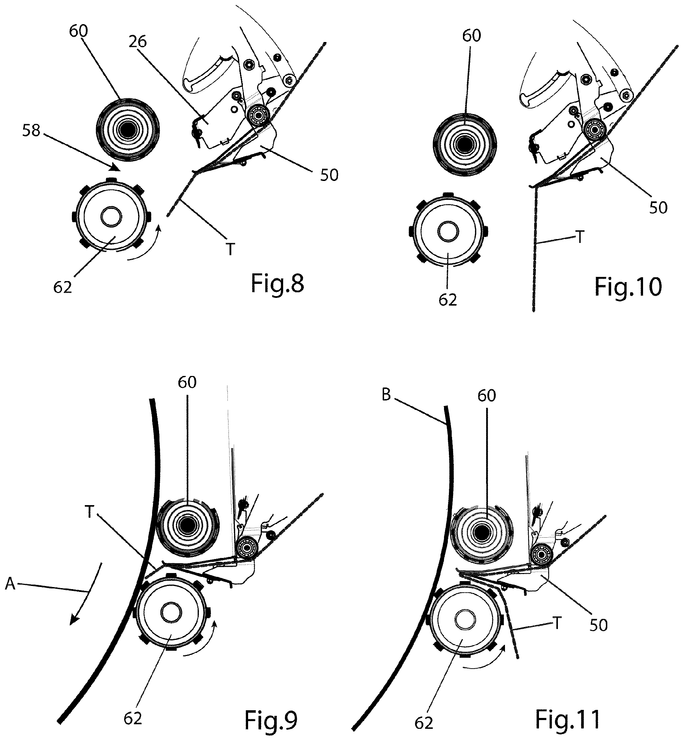

The feed device 42 also includes a feed mouth 50 located after the pull-off device 44. Optionally, the feed mouth has an open configuration and a closed configuration. In this embodiment the feed mouth 50 comprises a pair of lips 52, 53 that are pressed against one another when the feed mouth is in the closed configuration and define a narrow slot through which the film binding material F passes. Alternatively, the feed mouth 50 can adopt an open configuration in which the lips 52, 53 are spaced apart. The feed mouth 50 is mounted on a pair of pivot arms 54 that can pivot about a pivot point 55 between a feed position as shown in Figs. 4, 9, 13 & 14 in which film binding material F is fed into the bale chamber 20 through a feed opening 58, and a retracted position as shown for example in Figs. 6 and 8. An actuator (not shown) is provided for driving pivoting movement of the pivot arms 54 and the feed mouth 50.

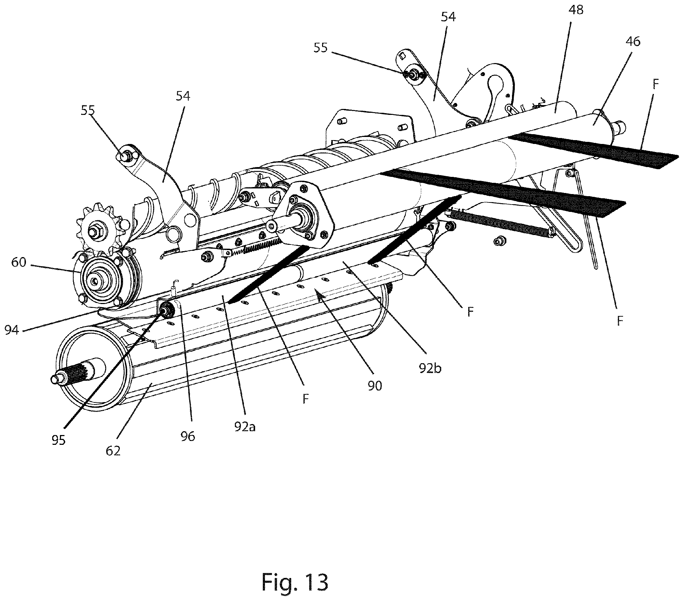

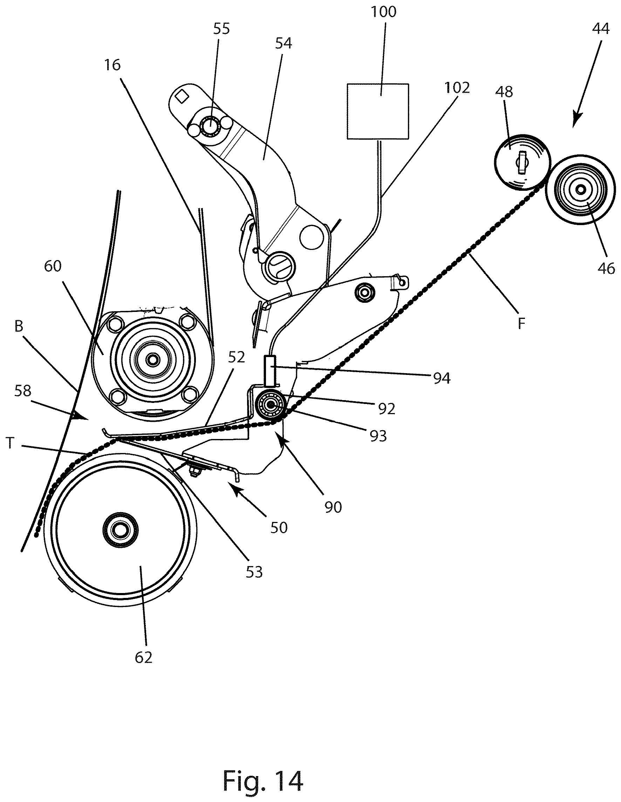

As shown for example in Figs. 13 and 14, a feed detector 90 is provided for detecting that the film binding material F is drawn correctly into the bale chamber 20 by rotation of the bale B, after the film binding material has been fed into the bale chamber 20 through the feed opening 59 by the feed mouth 50. The feed detector 90 may be located anywhere in the feed path between the feed rollers 46, 48 and the feed opening 58, so that it can detect whether the binding material is being drawn into the bale chamber 20 by rotation of the bale B.

In this embodiment the feed detector 90 comprises a freely rotatable detection roller 92, which is mounted on an axle 93 that extends across the width of the baler between the two pivot arms 54. In this embodiment the detection roller 92 is located in the upper part of the feed mouth 50, just behind the rear edge of the upper lip 52. However, it may alternatively be mounted elsewhere, for example between the feed rollers 46,48 and the feed mouth 50, or adjacent the feed opening 58.

In this embodiment the detection roller 92 is located in the path of the film binding material F between the feed rollers 46, 48 and the feed mouth 50 and it is positioned so that the film binding material F runs over the surface of the detection roller 92 when the feed mouth is in the feed position. Contact with the film binding material causes the detection roller to 92 rotate as the binding material is drawn into the bale chamber 20 by rotation of the bale B.

Rotation of the detection roller 92 is detected by at least one rotation sensor 94, which is associated with the detection roller 92, to detect rotation thereof. Various kinds of sensor can be used for the rotation sensor 94. For example, the rotation sensor 94 may comprise an optical sensor that detects light reflected from a mark 96 provided on the surface of the detection roller 92, or it may comprise a magnetic sensor that senses a magnetic marker on the roller, or a Hall-effect sensor, or a contact sensor, or numerous other kinds of sensor.

Instead of a detection roller, the feed detector 90 may comprise an alternative detector that contacts the film binding material. For example, the feed detector 90 may comprise a guide bar over which the film binding material runs, which is deflected by frictional contact with the film binding material as the binding material is drawn into the bale chamber. Movement of the guide bar as it is deflected may be sensed for example by a microswitch, a strain sensor or any other suitable detector.

Alternatively, the feed detector 90 may comprise a non-contact sensor that senses movement of the film binding material as the binding material is drawn into the bale chamber, without contacting the binding material. For example, a non-contact feed detector 90 may comprise an optical sensor, an ultrasonic sensor, a Doppler sensor or any other suitable sensor.

If the binding apparatus is designed to feed two or more strips of binding material F into the bale chamber 20, the feed detector 90 may be configured sense each strip of binding material as it is drawn into the bale chamber 20. For example, if the feed detector comprises a detection roller 92, the roller may be divided lengthwise into an equivalent number of parts. For example, as illustrated in Fig. 13, if two strips of binding material F are fed into the bale chamber 20, the detection roller 92 may be divided lengthwise into two parts 92a, 92b so that each of the roller parts contacts one of the strips of film binding material F. An equivalent number of rotation sensors (in this case two rotation sensors) may be associated with the detection roller 92 to detect the rotation of each part of the roller 92a, 92b. In this way, the feed detector 90 can detect that each strip of film binding material F is being drawn correctly into the bale chamber 20.

Advantageously, the detection roller 92 may be divided lengthwise into two parts 92a, 92b that are preferably mounted on a single axle 95, providing a simple and effective mounting mechanism.

In Fig. 13 the strips of film binding material F are illustrated as narrow bundled strips of film. Bundling the film in this way helps to guide the film as it is fed into the feed opening 58. However, the invention is also applicable to balers in which the film binding material is not bundled into one or more narrow strips of film when feeding the film binding material into the bale chamber 20.

The feed detector 90 may be configured to provide a control signal that indicates whether each strip of film binding material F is being drawn correctly or incorrectly into the bale chamber 20. The feed detector 90 may be connected to a control device 100 that receives the control signal from the feed detector 90. The feed detector 90 may be connected to the control device 100 by a hard connection or a wireless connection. For example, the feed detector 90 may be connected to the control device 100 by a control line 102, for example a wire or optical fibre, or it may be connected wirelessly, for example by Wi-Fi or a Bluetooth^{™} connection, or by any other suitable connection means.

The control device 100, which may for example be an electronic controller or any other suitable control device, may be configured to control operation of other components of the baler according to the control signal received from the feed detector 90. For example, the control device 100 may be configured to control operation of the pull-off device 44 comprising feed rollers 46, 48. For example, the control device 100 may be configured to halt operation of the pull-off device 44 if the control signal indicates that the film binding material (or at least one strip of the film binding material) is not being drawn correctly into the bale chamber 20, to prevent film binding material F from being drawn off the supply reel 32 if there is an interruption in feeding of binding material into the bale chamber 20. If the control signal indicates that film binding material is being drawn correctly into the bale chamber, the control device 100 may be configured to initiate or continue operation of the pull-off device 44 to draw film binding material F from the supply reel as it is fed into the bale chamber 20. The control device 100 may alternatively be configured to control operation of other components of the baler according to the control signal received from the feed detector 90.

The control device 100 may also be configured to alert the operator of the baler, for example by means of an alarm or warning signal, when it senses that the film binding material is not being drawn correctly into the bale chamber 20. This will provide the operator with an opportunity to investigate and rectify the problem.

Optionally, the control device 100 may also be configured to activate the cutter device 26 to cut one or more of the strips of binding material, including optionally any correctly fed strips of binding material, when incorrect feeding of one or more strips of binding material is detected by the feed detector.

When two or more strips of binding material are fed simultaneously into the baling chamber they are drawn from the supply device by the pull-off device 44, which engages both/all of the plurality of strips. If one strip of binding material is fed correctly into the bale chamber and another strip of binding material is not fed correctly into the bale chamber, the correctly-fed strip can drive the pull-off device 44 as the binding material is drawn into the bale chamber by rotation of the bale. As a result, the pull-off device 44 can continue to draw binding material from the supply for the incorrectly-fed strip, and this binding material can accumulate within the feed device causing a jam.

By cutting any correctly fed strips of binding material when incorrect feeding of one or more strips of binding material is detected by the feed detector, driving of the pull-off device 44 can be halted so that no more binding material is drawn from the supply. The operator can then re-feed the strips of binding material correctly through the binding apparatus without having to clear a jam.

Operation of the binding apparatus is illustrated in figures 4-8. Referring first to figure 5, this shows the configuration of the binding apparatus 24 during binding of a round bale B in the bale chamber. The film binding material F is drawn from the supply (reel 32) and passes around the pre-stretcher device 38, which stretches the film lengthwise. As the film is elastic this ensures that when the film is applied to the cylindrical surface of the bale B it is in tension so that it binds the bale tightly.

The film binding material F then passes along a feed path from the pre-stretcher device 38 to the surface of the bale B via the feed opening 58 in the bale chamber 20, which is located between a pair of adj acent press elements comprising, in this case, an idler roller 60 that supports the belts 16 and a driven press roller 62. It should be noted that the feed opening 58 for the binding material is relatively narrow, having a width between the idler roller 60 and the press roller 62 of typically 25-50mm.

The feed opening 58 is displaced from the crop mouth 21 through which bale materials are introduced into the bale chamber 20, which is located between a second press roller 64 and a third press roller 56 below the feed opening 58. The crop mouth 21 is also much wider than the feed opening 58, typically having a width of 300-400mm. The feed path along which the film binding material F is fed from the pre-stretcher device 38 to the surface of the bale B is defined by various components of the feed device 42 including the pull-off device 44, the detecting roller 92 and the feed mouth 50.

During binding of a bale, the bale B is rotated within the bale chamber 20 by the press elements, which may include belts and/or rollers. In the embodiment shown in figure 5 the bale B rotates in a clockwise direction indicated by arrow A and the press elements, which include both belts 16 and rollers (including the idler roller 60 and the driven press rollers 56, 62 and 64) rotate anti-clockwise. The film binding material F is fed into the bale chamber 20 though the feed opening 58, which is located between two adjacent press elements (idler roller 60 and press roller 62).

During binding of a bale B the film binding material F is drawn from the reel 32 primarily by rotation of the bale B within the bale chamber 20. The pull-off device 44 can also be driven during binding of the bale, for example from a drive pulley 65, via a drive belt 66 (see figure 2). Alternatively, the pull-off device 44 may be driven during binding of the bale by a separate drive means, for example an electric motor. In the illustrated example, the drive belt 66 passes around a driven pulley 68, which may for example be connected to the driven roller 46 of the pull-off device 44 via a magnetic clutch 70. The magnetic clutch 70 includes a freewheel (not shown), which allows the driven roller 46 to rotate slower, but not faster, than the pulley 68 in the feeding direction. Therefore, the active drive to the driven roller 46 limits the maximum speed of the driven roller. The pull-off device 44 can be braked by the adjustable brake 47 after the binding material has been severed, to limit or prevent further driving of the binding material by inertia.

During binding of the bale with film binding material, the magnetic clutch 70 is normally engaged and the pull-off device 44 is driven to draw film binding material at a speed that is less than the circumferential speed of the bale B in the bale chamber 20. Typically, the pull-off device 44 may be driven at approximately 90% of the speed of the bale B. Because the drive speed of the pull-off device 44 is less than the speed at which the binding material is drawn by the bale, the binding material will be stretched between the pull-off device and the bale, ensuring a tight binding. This stretching of the binding material is in addition to any pre-stretching that may have been applied by the pre-stretcher device 38. If net is used to bind the bale, the net binding material is normally drawn from the supply entirely by rotation of the bale without activating the pull-off device. However, the pull-off device may optionally be braked (or driven) so that it runs at approximately 90% of the circumferential speed of the bale B, so as to stretch the net binding material.

If the film starts to tear during binding, the actively-driven pull-off device 44 will continue to rotate, to reduce the risk that the film binding material F will tear across its full width. The pull-off device 44 is driven actively at this time by engaging the clutch 70.

During binding the feed mouth 50 is located in a binding position, approximately midway between the pull-off device 44 and the feed opening 58, where it serves to guide the film binding material F from the pull-off device to the feed opening 58.

It will be noted that during binding of the bale B the reel 32 is in the horizontal binding position and the axis of the reel 32 is substantially parallel to the axes of the feed guide rollers 49, 49', the axis of the pull-off device 44, the axes of the rollers 60-64 and longitudinal axis the cylindrical bale B. Therefore, there is no twisting of the plane of the film binding material F as it passes from the reel 32 to the surface of the bale B. This ensures that the film binding material F is spread to its full width as it is applied to the bale. Also, it should be noted that in this embodiment two strips of film binding material F are applied side by side to the cylindrical surface of the bale B to cover the width of the bale B.

Once binding of the bale has been completed, the feed mouth 50 is retracted and the film binding material F is cut, so that the bound bale B can be ejected from the bale chamber 20. The configuration of the feed device 42 after the film binding material F has been cut is illustrated in figure 6.

It should be noted that in this embodiment the reels 32 of film binding material F have been rotated through 90 degrees from the horizontal binding position shown in figure 5 to the vertical bundling position, in which the axis of the supply guide roller 39 is perpendicular to the axes of the feed guide rollers 49, 49'. As a result, the film binding material F is gathered together or bundled to form a narrow strip of bundled film binding material as it passes over the feed guide rollers 49, 49'. The bundled strip of film binding material typically has a width of only 10-15mm, compared to a width of typically 620mm for the unbundled film binding material. Bundling of the film is optional and may be omitted if not required.

The bundled strip of film binding material then passes through the pull-off device 44, over the feed detector 90 and into the feed mouth 50. When the feed mouth 50 is in the fully retracted position it adopts an open configuration as shown in figure 6, where the two lips 52, 53 are spaced apart to form a substantially vertical open passageway 72.

The feed mouth 50 is opened when it reaches the retracted position by the engagement of a roller 74 with a fixed part 76 of the frame of the baler. This causes the lower lip 53 to pivot open about a pivot 80. When the feed mouth 50 is in the open configuration, the pull-off device 44 can be driven to feed a length of film binding material F through the feed mouth 50 to increase the length of the cut end of the film binding material that extends from the front end of the feed mouth 50. If the film has been bundled this cut end of bundled film binding material forms a relatively stiff tongue T of film binding material that extends from the end of the feed mouth 50.

The length of the tongue T can be adjusted by controlling operation of the pull-off device 44, for example by adjustable braking and/or by operation of the magnetic clutch 70. Optionally, operation of the pull-off device 44 can be controlled automatically for example by an electronic control system or a computer, based on a number of factors including, for example, one or more of the following factors: a user setting for a long or short tongue, the PTO speed, the stretch setting of the pre-stretcher device 38, and environmental conditions such as temperature.

Figure 7 illustrates the feed device 42 in a holding configuration, which it adopts while a bale is being formed in the bale chamber 20. The feed mouth 50 has moved forward from the retracted position shown in figure 6 and the upper and lower lips 52, 53 have closed, gripping the tongue T of film binding material, which extends from the feed mouth. Because the feed mouth 50 is closed, the cut end of the film material is held securely and cannot blow around, for example in windy conditions. Also, because the feed mouth 50 is closed, dust and dirt from the baler cannot enter the feed mouth 50.

Figure 4 illustrates the feed device 42 in the feed position, in which the cut end of the film binding material (the tongue T) is fed by the feed mouth 50 into the bale chamber 20 through the feed opening 58. The feed mouth 50 has pivoted forwards towards the bale chamber 20 so that the tongue T is caught between the rotating bale B and the press roller 62, thus drawing the film binding material into the bale chamber 20. It will be noted that the feed mouth 50 extends into the narrow feed opening 58 between the press elements (rollers) 60, 62, so that the position of the tongue T is closely controlled.

The tongue T is optionally formed from bundled film binding material, which has a much greater stiffness that the unbundled film binding material. This makes it easier to control. The length of the tongue T is also carefully controlled by operation of the pull-off device 44 as described above, to ensure that it passes correctly through the feed opening 58 and is caught by the bale.

The possible consequences of different tongue lengths are illustrated in figures 8-11. In figure 8 the tongue length is correct and the tongue T extends forwards from the feed mouth 50 as it moves from the holding position to the feed position. Continued movement of the feed mouth 50 into the feed opening 58 will carry the tongue T through the gap between the rollers 60, 62 where it will be presented to the cylindrical surface of the bale. The anticlockwise rotation of the press roller 62 assists with feeding the tongue into the bale chamber 20 through the feed opening 59.

As the feed mouth 50 moves forwards from the holding position to the feed position, the pull-off device 44 is driven by the arc gear 84 to draw film binding material from the supply device 28. However, the pull-off device 44 is configured to draw a length of film binding material that is less than the length required to accommodate movement of the feed mouth 50 from the holding position to the feed position. As a result, the tongue T is partially drawn back into the feed mouth 50, which causes it to stand up in a more erect position. This allows it to be fed more accurately through the feed opening 58. The length of the tongue T is however sufficient to allow it to be caught between the rotating bale B and the press roller 62, so that the film binding material is drawn around the cylindrical surface of the bale B as it rotates.

Figure 9 illustrates a situation in which the length of the tongue T is incorrectly controlled, with the result that the tongue is too short. In this case, the tongue T is not caught between the bale B and the press roller 62, even though the feed mouth 50 has moved fully into the feed opening 58. The result is that the film binding material is not drawn around the cylindrical surface of the bale and the bale is not bound.

Figures 10 and 11 illustrate a situation in which the tongue T is too long. As a result of its increased weight, the tongue T hangs downwards from the feed mouth 50 as it moves forwards toward the feed opening 58 (figure 10). The end of the tongue T is not then inserted correctly through the feed opening 58 when the feed mouth 50 reaches the feed position (figure 11), but instead extends outward beyond the roller 62. Again, the result is that the film binding material is not drawn around the cylindrical surface of the bale B and the bale is not bound.

As described above, when the tongue length is correct as illustrated in Fig. 8, the tongue T will normally be carried through the feed opening 58 between the rollers 60, 62 and presented to the surface of the bale B. Normally, the tongue T will then be caught between the surface of the rotating bale and the press rollers 62, 64 etc and drawn around the circumference of the bale B.

However, under certain circumstances, for example when the surface of the bale is wet and slippery, or if the tongue T of film material is too short or bent, it might not be caught between the surface of the rotating bale and the press rollers 62, 64 etc and drawn correctly around the circumference of the bale B. If the pull-off device 44 continues to draw film binding material from the supply reel in this situation it can become tangled around the rollers and other components of the binding apparatus, interrupting operation of the baler and requiring a time-consuming cleaning operation.

To avoid this problem the control device 100 may be configured to halt operation of the pull-off device 44, for example by disengaging the magnetic clutch 70, if the feed detector 90 senses that the film binding material is not being drawn correctly into the bale chamber 20. This prevents further film binding material being drawn from the supply reel 32. If the feed detector 90 indicates that film binding material is being drawn correctly into the bale chamber, the control device 100 may be configured to initiate or continue operation of the pull-off device 44, for example by engaging the magnetic clutch 70, to draw film binding material F from the supply reel as it is fed into the bale chamber 20.

Alternatively, the control device 100 may be configured to initiate operation of the pull-off device 44 only after the feed detector 90 senses that the film binding material is being drawn into the bale chamber 20. The elasticity of the film will allow some limited movement of the film binding material over the feed detector 90 even if the pull-off device 44 is halted. When this movement is detected, indicating that the film binding material is being drawn into the bale chamber 20, the pull-off device 44 may be activated, for example by engaging the magnetic clutch 70, to draw film binding material F from the supply reel.

Alternatively, the control device 100 may be configured to alert the operator, for example by an alarm or warning signal, if the feed detector 90 senses that the film binding material is not being drawn correctly into the bale chamber 20. The operator can then halt operation of the pull-off device 44, for example by disengaging the magnetic clutch 70. This prevents further film binding material being drawn from the supply reel 32. If the feed detector 90 indicates that film binding material is being drawn correctly into the bale chamber, the control device 100 may again be configured to notify the operator so that the operator can resume operation of the pull-off device 44 to draw film binding material F from the supply reel as it is fed into the bale chamber 20.

Operation of the feed device will now be described in more detail.

Figure 4 illustrates the configuration of the feed device 42 during feeding of the film binding material F. At this stage, the bale B has been completely formed in the bale chamber 20 and the feed mouth 50 has been moved to the feed position within the feed opening 58. The tongue T of film binding material is presented to the bale and is caught between the cylindrical surface of the rotating bale B and the press roller 62. Film binding material is thus drawn into the bale chamber 20. In this embodiment the reel 32 of film binding material is still in the vertical bundling position so that the film binding material is bundled to form a bundled tongue. In the case of film binding material, the pull-off device 44 is activated to draw film binding material from the reel 32, preferably for the full feeding time. This is not needed with net binding material: the net will drive the pull-off device 44, the speed of the pull-off device being limited by the freewheel.

Once the tongue T of film binding material has been caught by the bale B, binding of the bale can commence as illustrated in figure 5. The feed mouth 50 is partially retracted from the feed opening 58 to the binding position and in this embodiment the reel 32 of film binding material is rotated to the horizontal binding position so that the film binding material F is not bundled as it is drawn off the reel. The film binding material F is stretched by the pre-stretching device 38, to increase the length of the film binding material, for example by a factor of 1.3 to 1.8, or 1.4 to 1.6, or typically about 1.5.

The feed detector 90 senses that the film binding material is being drawn correctly into the bale chamber 20, and the pull-off device 44 is activated to draw film from the supply. The pull-off device 44 is driven at a speed that is less that the circumferential speed of the bale in the bale chamber, so that the film is drawn into the bale chamber 20 primarily by rotation of the bale B. If the feed detector 90 senses that the film binding material is not being drawn correctly into the bale chamber 20, the control device 100 halts operation of the pull-off device 44 by disengaging the magnetic clutch 70 to prevent further film binding material being drawn from the supply reel 32.

Optionally, the binding apparatus may be configured to bring the feed mouth 50 to the retracted position and then activate the cutter device 26 to cut the binding material when feeding of the binding material into the bale chamber is not detected by the feed detector 90. The binding process can then be restarted by bringing the feed mouth 50 back to the feed position to feed the binding material into the bale chamber. This is particularly helpful when two or more strips of binding material are used to bind the bale and the feed detector 90 senses that one of the strips of film binding material is not being drawn correctly into the bale chamber 20. Re-starting the binding process ensures that the bale is bound correctly across its full width. These operations can be controlled automatically by the control device 100, or by operator input.

In the event that the film binding material starts to tear, the pull-off device 44 continues to feed the film towards the bale chamber, to ensure that the tear does not spread across the entire width of the film.

If the supply of film binding material runs out during binding of a bale this will be detected by the feed detector 90, as the film will no longer run over the feed detector 90. The feed detector 90 may then be configured to send a control signal to the control unit 100, which responds by halting operation of the baler and alerting the operator, for example by means of an alarm or warning signal, so that the operator can replace the reel of film before recommencing operation of the baler.

If two or more strips of binding material are used to bind the bale and one of the supplies of binding material runs out, this will be detected by the feed detector 90. In this case, the binding apparatus may be configured to bring the feed mouth 50 to the retracted position and then activate the cutter device 26 to cut the remaining strip of binding material. After the exhausted supply has been replenished, the binding process can be restarted by bringing the feed mouth 50 back to the feed position to feed the binding material into the bale chamber. These operations can be controlled automatically by the control device 100, or by operator input.

The film binding material F passes through the feed mouth 50 and is drawn over the edges of the upper lip 52, which spreads the film so that the two strips of film cover the full width of the bale. Binding continues until an adequate thickness of film binding material has been applied to the cylindrical surface of the bale B. Typically, this may require three to five layers of film binding material.

Once binding of the bale has been completed, the reel 32 of film binding material F is optionally rotated back to the vertical bundling position shown in figure 6, so that the film binding material is gathered together into a narrow bundled strip. The cutter device 26 is then activated to cut the film between the feed mouth 50 and the feed opening 58, and the brake 47 is applied to halt rotation of the pull-off device 44. The feed mouth 50 is then retracted fully, causing the feed mouth to open. The bound bale can then be ejected from the bale chamber 20.

As the film binding material F has been stretched by the pre-stretcher device 38, it is under tension. Therefore, when the film binding material is cut, the tongue T contracts into the feed mouth 50 towards the pull-off device 44. After cutting, the pull-off device 44 is actuated to feed an additional length of film binding material towards the feed mouth 50, to increase the length of the tongue T that extends from the end of the feed mouth 50. As the feed mouth 50 is open, the film binding material falls freely through the passageway 72. Once the correct length of the tongue T has been fed through the feed mouth 50, the pull-off device 44 is deactivated, for example by disengaging the magnetic clutch 70.

Optionally, the feed mouth 50 is then moved forward from the fully retracted position to the holding position shown in figure 7. As it moves to this position, the feed mouth 50 closes, gripping the tongue T of film material between the lips 52,53. The feed mouth 50 remains in the holding position until the next bale has been formed in the bale chamber 20.

Upon completion of the bale, the feed mouth 50 moves to the feed position shown in figure 4 to repeat the binding process. During movement of the feed mouth 50 from the holding position shown in figure 7 to the feeding position shown in figure 4, the pull-off device 44 is driven by an arc gear 84 to draw a length of film binding material that is less than the length required to accommodate movement of the feed mouth 50 from the holding position to the feed position, so that the tongue T is drawn partially back into the feed mouth 50.

This causes the tongue T to adopt an erect position in which it can be inserted more easily into the feed opening 58.

As mentioned above, in this embodiment, the baler also includes a reel 40 of net binding material N, which can optionally be used instead of the film binding material if the use of net binding material is preferred. The configuration of the binding apparatus 24 when set up for net binding is illustrated in Figure 12, which shows the feed mouth 50 in the fully retracted position.

Net binding material N is drawn off from the reel 40 and passes around the second feed guide roller 49' and an idler roller 82. It is then engaged by the pull-off device 44 and fed to the feed mouth 50, which is located after the pull-off device 44.

When the feed mouth 50 is in the fully retracted position as shown in Figure 12 it adopts an open configuration where the two lips 52, 53 are spaced apart to provide a substantially vertical open passageway 72. While the feed mouth 50 is open the pull-off device 44 can be driven to feed a length of net binding material N through the feed mouth 50 to increase the length of the cut end E of net binding material that extends from the end of the feed mouth 50. As the feed mouth 50 is open, the cut end E of net binding material falls freely through the passageway 72. Once the correct length of net binding material has been fed through the feed mouth 50, the pull-off device 44 is deactivated and/or braked.

The length of the cut end E can be adjusted by controlling operation of the pull-off device 44, for example by adjustable operation of the brake 47 or by operation of the magnetic clutch 70. Optionally, operation of the pull-off device 44 can be controlled automatically for example by an electronic control system or a computer, based on a number of factors including, for example, a user setting for a long or short tongue, and/or the PTO speed.

The feed mouth 50 is then moved forward from the fully retracted position to the holding position, which is similar to the holding position shown in figure 7. As it moves to the holding position, the feed mouth 50 closes, gripping the cut end E of net binding material between the lips 52, 53. The feed mouth 50 remains in the holding position until the next bale has been formed in the bale chamber 20.

Upon completion of the bale, the feed mouth 50 moves to the feed position, which is similar to the feed position shown in figure 4, to start the binding process. During movement of the feed mouth 50 to the feeding position, the pull-off device may optionally be driven by the arc gear 84 to draw a length of net binding material N from the reel 40.

During movement of the feed mouth to the feed position, the cut end E of net binding material is drawn partially back into the feed mouth 50, causing the cut end E to adopt a more erect position in which it can be inserted more easily into the feed opening 58.

After the cut end E has been fed correctly into the bale chamber 20, the feed mouth 50 may be retracted to a binding position, which is similar to the binding position shown in Figure 5, where it remains until binding of the bale has been completed. The feed mouth 50 then moves back to the fully retracted position shown in Figure 12 and the net binding material N is cut, allowing the bound bale to be released from the bale chamber 20. The binding process then repeats as necessary.

## Claims

1. A round baler comprising a bale chamber (20) having a crop mouth (21) for introducing bale material into the bale chamber (20) and a plurality of pressing elements (16,18,60,52,6264) configured to compress bale material in the bale chamber (20) to form a round bale (B), a binding apparatus (24) configured to apply at least one strip of binding material to a cylindrical surface of a bale (B) formed in the bale chamber (20) to bind the bale, wherein the binding apparatus (24) includes a supply device (28) comprising a support (30) for a supply of binding material and a feed device (42) that feeds binding material from the supply to a feed opening (58) of the bale chamber, wherein the feed device (42) includes a pull-off device (44) that is configured to draw binding material from the supply and a feed mouth (50) that receives binding material from the pull-off device (44); a feed detector (90) located between the pull-off device (44) and the feed opening (58), which is configured to detect correct/incorrect feeding of the binding material into the bale chamber (20); **characterised by** the binding apparatus (24) is configured to apply a plurality of strips of binding material to the cylindrical surface of a bale (B) formed in the bale chamber (20) to bind the bale (B), and wherein the feed detector (90) is configured to detect correct/incorrect feeding of each of the strips of binding material into the bale chamber (20).

2. A round baler according to claim 1, wherein the binding apparatus further comprises a cutter (26) for cutting the strips of binding material between the feed mouth (50) and the feed opening (58), wherein the cutter (26) is configured to cut one or more of the strips of binding material, including optionally any correctly fed strips of binding material, when incorrect feeding of one or more strips of binding material is detected by the feed detector (90).

3. A round baler according to any preceding claim, further comprising a control device (100) that is configured to alert an operator and/or to control operation of the pull-off device (44) depending on whether correct/incorrect feeding of the binding material into the bale chamber (20) is detected by the feed detector (90).

4. A round baler according to claim 3, wherein the control device (100) is configured to halt operation of the pull-off device (44) when incorrect feeding of the binding material into the bale chamber (20) is detected by the feed detector (90).

5. A round baler according to claim 3 or claim 4, wherein the control device (100) is configured to enable operation of the pull-off device (44) when correct feeding of the binding material into the bale chamber (20) is detected by the feed detector (90).

6. A round baler according to any one of the preceding claims, wherein the feed detector (90) is configured to contact the binding material and to detect relative movement between the feed detector (90) and the binding material.

7. A round baler according to claim 6, wherein the feed detector (90) comprises a detection roller (92) that contacts the binding material and rotates in response to feeding of the binding material into the bale chamber (20), and optionally a rotation detector (94) that senses rotation of the detection roller (92).

8. A round baler according to claim 7, wherein the feed detector (90) comprises a plurality of detection rollers (92) that contact separate strips of binding material and rotate in response to feeding of the strips of binding material into the bale chamber (20).

9. A round baler according to any one of the preceding claims, wherein the feed detector (90) is located between the pull-off device (44) and the feed mouth (50).

10. A round baler according to any one of the preceding claims, wherein the feed mouth (50) is configured for movement between a plurality of operational positions, said plurality of operational positions including (i) a feed position adjacent the feed opening (58) of the bale chamber which the feed mouth (50) adopts when feeding binding material into the bale chamber (20), and (ii) a retracted position spaced from the feed opening (58), and optionally wherein the feed mouth (50) is configured for pivoting movement between the plurality of operational positions.

11. A round baler according to claim 10, wherein the feed detector (90) is attached to the feed mouth (50) and is configured for movement with the feed mouth (50) between the feeding position and the retracted position.

12. A round baler according to any one of the preceding claims, wherein the supply device (28) includes a pre-stretcher device (38) located before the pull-off device (44), for pre-stretching the binding material.

13. A round baler according to any one of the preceding claims, wherein the binding material is film binding material (F).

14. A round baler according to any one of the preceding claims, wherein the binding apparatus (24) includes a bundling device (36,34) that is configured to bundle the strip or strips of binding material, optionally by rotating the plane of the binding material upstream of the feed mouth (50) about an axis (34) that extends in the feed direction of the binding material.

## Patentansprüche

1. Eine Rundballenpresse, die Folgendes beinhaltet: eine Ballenkammer (20) mit einer Erntemündung (21) zum Einführen von Ballenmaterial in die Ballenkammer (20) und eine Vielzahl von Presselementen (16, 18, 60, 52, 6264), die so konfiguriert sind, dass sie Ballenmaterial in der Ballenkammer (20) zusammenpressen, um einen Rundballen (B) zu bilden, eine Bindeeinrichtung (24), die so konfiguriert ist, dass sie mindestens einen Streifen von Bindematerial auf eine zylindrische Oberfläche eines in der Ballenkammer (20) gebildeten Ballens (B) aufbringt, um den Ballen zu binden, wobei die Bindeeinrichtung (24) eine Zufuhrvorrichtung (28), die einen Träger (30) für eine Zufuhr von Bindematerial beinhaltet, und eine Fördervorrichtung (42), die Bindematerial von der Zufuhr zu einer Förderöffnung (58) der Ballenkammer fördert, umfasst, wobei die Fördervorrichtung (42) eine Abziehvorrichtung (44), die so konfiguriert ist, dass sie Bindematerial von der Zufuhr abzieht, und eine Fördermündung (50), die Bindematerial von der Abziehvorrichtung (44) aufnimmt, umfasst; einen Förderdetektor (90), der zwischen der Abziehvorrichtung (44) und der Förderöffnung (58) angeordnet und so konfiguriert ist, dass er das korrekte/inkorrekte Fördern des Bindematerials in die Ballenkammer (20) detektiert; **dadurch gekennzeichnet, dass** die Bindeeinrichtung (24) so konfiguriert ist, dass sie eine Vielzahl von Streifen von Bindematerial auf die zylindrische Oberfläche eines in der Ballenkammer (20) gebildeten Ballens (B) aufbringt, um den Ballen (B) zu binden, und wobei der Förderdetektor (90) so konfiguriert ist, dass er das korrekte/inkorrekte Fördern jedes der Streifen von Bindematerial in die Ballenkammer (20) detektiert.

2. Rundballenpresse gemäß Anspruch 1, wobei die Bindeeinrichtung ferner einen Schneider (26) zum Schneiden der Streifen von Bindematerial zwischen der Fördermündung (50) und der Förderöffnung (58) beinhaltet, wobei der Schneider (26) so konfiguriert ist, dass er einen oder mehrere der Streifen von Bindematerial, einschließlich optional beliebiger korrekt geförderter Streifen von Bindematerial, schneidet, wenn ein inkorrektes Fördern eines oder mehrerer Streifen von Bindematerial durch den Förderdetektor (90) detektiert wird.

3. Rundballenpresse gemäß einem der vorhergehenden Ansprüche, die ferner eine Steuervorrichtung (100) beinhaltet, die so konfiguriert ist, dass sie einen Betreiber warnt und/oder den Betrieb der Abziehvorrichtung (44) steuert, je nachdem, ob ein korrektes/inkorrektes Fördern des Bindematerials in die Ballenkammer (20) durch den Förderdetektor (90) detektiert wird.

4. Rundballenpresse gemäß Anspruch 3, wobei die Steuervorrichtung (100) so konfiguriert ist, dass sie den Betrieb der Abziehvorrichtung (44) anhält, wenn ein inkorrektes Fördern des Bindematerials in die Ballenkammer (20) durch den Förderdetektor (90) detektiert wird.

5. Rundballenpresse gemäß Anspruch 3 oder Anspruch 4, wobei die Steuervorrichtung (100) so konfiguriert ist, dass sie den Betrieb der Abziehvorrichtung (44) ermöglicht, wenn ein korrektes Fördern des Bindematerials in die Ballenkammer (20) durch den Förderdetektor (90) detektiert wird.

6. Rundballenpresse gemäß einem der vorhergehenden Ansprüche, wobei der Förderdetektor (90) so konfiguriert ist, dass er das Bindematerial berührt und eine relative Bewegung zwischen dem Förderdetektor (90) und dem Bindematerial detektiert.

7. Rundballenpresse gemäß Anspruch 6, wobei der Förderdetektor (90) eine Detektionsrolle (92), die das Bindematerial berührt und sich als Reaktion auf das Fördern des Bindematerials in die Ballenkammer (20) dreht, und optional einen Drehungsdetektor (94), der die Drehung der Detektionsrolle (92) erfasst, beinhaltet.

8. Rundballenpresse gemäß Anspruch 7, wobei der Förderdetektor (90) eine Vielzahl von Detektionsrollen (92) beinhaltet, die separate Streifen von Bindematerial berühren und sich als Reaktion auf das Fördern der Streifen von Bindematerial in die Ballenkammer (20) drehen.

9. Rundballenpresse gemäß einem der vorhergehenden Ansprüche, wobei der Förderdetektor (90) zwischen der Abziehvorrichtung (44) und der Fördermündung (50) angeordnet ist.

10. Rundballenpresse gemäß einem der vorhergehenden Ansprüche, wobei die Fördermündung (50) für eine Bewegung zwischen einer Vielzahl von Betriebspositionen konfiguriert ist, wobei die Vielzahl von Betriebspositionen (i) eine Förderposition neben der Förderöffnung (58) der Ballenkammer, die die Fördermündung (50) beim Fördern von Bindematerial in die Ballenkammer (20) einnimmt, und (ii) eine zurückgezogene Position, die von der Förderöffnung (58) beabstandet ist, umfasst, und wobei die Fördermündung (50) optional für eine Schwenkbewegung zwischen der Vielzahl von Betriebspositionen konfiguriert ist.

11. Rundballenpresse gemäß Anspruch 10, wobei der Förderdetektor (90) an der Fördermündung (50) angebracht und für eine Bewegung mit der Fördermündung (50) zwischen der Förderposition und der zurückgezogenen Position konfiguriert ist.

12. Rundballenpresse gemäß einem der vorhergehenden Ansprüche, wobei die Zufuhrvorrichtung (28) eine Vorstreckvorrichtung (38) umfasst, die vor der Abziehvorrichtung (44) angeordnet ist, um das Bindematerial vorzustrecken.

13. Rundballenpresse gemäß einem der vorhergehenden Ansprüche, wobei das Bindematerial Folienbindematerial (F) ist.

14. Rundballenpresse gemäß einem der vorhergehenden Ansprüche, wobei die Bindeeinrichtung (24) eine Bündelungsvorrichtung (36, 34) umfasst, die so konfiguriert ist, dass sie den Streifen oder die Streifen von Bindematerial bündelt, optional durch Drehen der Ebene des Bindematerials stromaufwärts der Fördermündung (50) um eine Achse (34), die sich in der Förderrichtung des Bindematerials erstreckt.

## Revendications

1. Une presse à balles rondes comprenant une chambre à balle (20) ayant une bouche à récolte (21) pour l'introduction de matière pour balle jusque dans la chambre à balle (20) et une pluralité d'éléments presseurs (16, 18, 60, 52, 6264) configurés pour comprimer la matière pour balle dans la chambre à balle (20) afin de former une balle ronde (B), un appareil de liage (24) configuré pour appliquer au moins une bande de matériau de liage sur une surface cylindrique d'une balle (B) formée dans la chambre à balle (20) afin de lier la balle, dans laquelle l'appareil de liage (24) inclut un dispositif d'approvisionnement (28) comprenant un support (30) pour un organe d'approvisionnement en matériau de liage et un dispositif d'alimentation (42) qui alimente une ouverture d'alimentation (58) de la chambre à balle en matériau de liage provenant de l'organe d'approvisionnement, dans laquelle le dispositif d'alimentation (42) inclut un dispositif de tirage (44) qui est configuré pour extraire du matériau de liage de l'organe d'approvisionnement et une bouche d'alimentation (50) qui reçoit du matériau de liage en provenance du dispositif de tirage (44) ; un détecteur d'alimentation (90) situé entre le dispositif de tirage (44) et l'ouverture d'alimentation (58), lequel est configuré pour détecter une alimentation correcte/incorrecte de la chambre à balle (20) en le matériau de liage ; **caractérisée en ce que** l'appareil de liage (24) est configuré pour appliquer une pluralité de bandes de matériau de liage sur la surface cylindrique d'une balle (B) formée dans la chambre à balle (20) afin de lier la balle (B), et dans laquelle le détecteur d'alimentation (90) est configuré pour détecter une alimentation correcte/incorrecte de la chambre à balle en chacune des bandes de matériau de liage (20).

2. Une presse à balles rondes selon la revendication 1, dans laquelle l'appareil de liage comprend en outre un dispositif de coupe (26) pour couper des bandes de matériau de liage entre la bouche d'alimentation (50) et l'ouverture d'alimentation (58), dans laquelle le dispositif de coupe (26) est configuré pour couper une ou plusieurs des bandes de matériau de liage, y compris facultativement toutes bandes de matériau de liage en lesquelles l'alimentation est correcte, lorsqu'une alimentation incorrecte en une ou plusieurs bandes de matériau de liage est détectée par le détecteur d'alimentation (90).

3. Une presse à balles rondes selon n'importe quelle revendication précédente, comprenant en outre un dispositif de commande (100) qui est configuré pour alerter un opérateur et/ou pour commander le fonctionnement du dispositif de tirage (44) selon qu'une alimentation correcte/incorrecte de la chambre à balle (20) en le matériau de liage est détectée par le détecteur d'alimentation (90).

4. Une presse à balles rondes selon la revendication 3, dans laquelle le dispositif de commande (100) est configuré pour arrêter le fonctionnement du dispositif de tirage (44) lorsqu'une alimentation incorrecte de la chambre à balle (20) en le matériau de liage est détectée par le détecteur d'alimentation (90).

5. Une presse à balles rondes selon la revendication 3 ou la revendication 4, dans laquelle le dispositif de commande (100) est configuré pour permettre le fonctionnement du dispositif de tirage (44) lorsqu'une alimentation correcte de la chambre à balle (20) en le matériau de liage est détectée par le détecteur d'alimentation (90).

6. Une presse à balles rondes selon l'une quelconque des revendications précédentes, dans laquelle le détecteur d'alimentation (90) est configuré pour entrer en contact avec le matériau de liage et pour détecter un mouvement relatif entre le détecteur d'alimentation (90) et le matériau de liage.

7. Une presse à balles rondes selon la revendication 6, dans laquelle le détecteur d'alimentation (90) comprend un rouleau de détection (92) qui entre en contact avec le matériau de liage et tourne en réponse à l'alimentation de la chambre à balle (20) en le matériau de liage, et facultativement un détecteur de rotation (94) qui capte la rotation du rouleau de détection (92).

8. Une presse à balles rondes selon la revendication 7, dans laquelle le détecteur d'alimentation (90) comprend une pluralité de rouleaux de détection (92) qui entrent en contact avec des bandes distinctes de matériau de liage et tournent en réponse à l'alimentation de la chambre à balle (20) en les bandes de matériau de liage.

9. Une presse à balles rondes selon l'une quelconque des revendications précédentes, dans laquelle le détecteur d'alimentation (90) est situé entre le dispositif de tirage (44) et la bouche d'alimentation (50).

10. Une presse à balles rondes selon l'une quelconque des revendications précédentes, dans laquelle la bouche d'alimentation (50) est configurée pour se mouvoir entre une pluralité de positions de fonctionnement, ladite pluralité de positions de fonctionnement incluant (i) une position d'alimentation adjacente à l'ouverture d'alimentation (58) de la chambre à balle que la bouche d'alimentation (50) adopte lors de l'alimentation de la chambre à balle (20) en matériau de liage, et (ii) une position rétractée espacée de l'ouverture d'alimentation (58), et facultativement dans laquelle la bouche d'alimentation (50) est configurée pour se mouvoir par pivotement entre la pluralité de positions de fonctionnement.

11. Une presse à balles rondes selon la revendication 10, dans laquelle le détecteur d'alimentation (90) est fixé à la bouche d'alimentation (50) et est configuré pour se mouvoir avec la bouche d'alimentation (50) entre la position d'alimentation et la position rétractée.

12. Une presse à balles rondes selon l'une quelconque des revendications précédentes, dans laquelle le dispositif d'approvisionnement (28) inclut un dispositif pré-tenseur (38) situé avant le dispositif de tirage (44), pour la pré-tension du matériau de liage.

13. Une presse à balles rondes selon l'une quelconque des revendications précédentes, dans laquelle le matériau de liage est du matériau de liage en film (F).

14. Une presse à balles rondes selon l'une quelconque des revendications précédentes, dans laquelle l'appareil de liage (24) inclut un dispositif de mise en liasse (36, 34) qui est configuré pour enliasser la bande ou les bandes de matériau de liage, facultativement en faisant tourner le plan du matériau de liage en amont de la bouche d'alimentation (50) autour d'un axe (34) qui s'étend dans la direction d'alimentation en le matériau de liage.
